# EUROPÄISCHE PATENTSCHRIFT

(11) **EP 3 089 118 B1**
(45) Veröffentlichungstag und Bekanntmachung des Hinweises auf die Patenterteilung: **14.11.2018**
(21) Anmeldenummer: 15001267.2
(22) Anmeldetag: 29.04.2015
(51) Int. Cl.: G07C 9/00, G06K 19/00, B42D 25/00

(54) **Zugangsberechtigungssystem umfassend wenigstens eine Anordnung von mehreren Mikropartikeln und wenigstens eine Identifizierungseinheit**
Access authorization system comprising at least one assembly of a plurality of microparticles and at least one identifying unit
Système d'autorisation d'accès comprenant au moins un système de plusieurs microparticules et au moins une unité d'identification

(43) Veröffentlichungstag der Anmeldung: 02.11.2016
(73) Patentinhaber: 3S Simons Security Systems GmbH, 48301 Nottuln (DE)
(72) Erfinder: Simons, Rolf, D-48301 Nottuln (DE)
(74) Vertreter: DTS Patent- und Rechtsanwälte Schnekenbühl und Partner mbB

(56) Entgegenhaltungen:
- EP-A1- 2 688 011
- EP-A2- 1 335 327
- WO-A2-2007/106512
- US-A- 5 673 338

## Beschreibung

Die vorliegende Erfindung betrifft ein Zugangsberechtigungssystem umfassend wenigstens eine Anordnung von mehreren Mikropartikeln. Im Zusammenhang mit Zugangsberechtigungssystemen, insbesondere zu Rechnersystemen oder Rechnernetzwerken, aber auch Zugangskontrollen zu Gebäuden werden neben einfachen mechanischen Zugangskontrollen, wie beispielsweise Schlüsseln, auch kombinierte mechanische und elektronische Zugangskontrollen oder rein elektronische Zugangskontrollen durchgeführt.

In diesem Zusammenhang werden beispielsweise Zugangskarten oder Passwörter abgefragt.

Bei elektronischen Zugangskontrollen hat es sich jedoch als problematisch herausgestellt, dass derartige Zugangskontrollen durch Spezialisten umgangen werden können, wobei sich diese Spezialisten Schwachstellen in den elektronischen Zugangskontrollen zu Nutze machen und diese "hacken".

Es besteht daher die Notwendigkeit, Zugangsberechtigungssysteme noch sicherer zu machen, insbesondere dahingehend, dass sich nicht berechtigte Personen keinen oder nur unter erschwerten Bedingungen Zugang zu den geschützten Systemen mit Zugangsberechtigung verschaffen können.

Aus der DE 26 51 158 A1 sind bereits farbcodierte Mikroteilchen bekannt, die aus mehreren farbigen Schichten in einer vorgewählten Farbfolge bestehen, wobei die Farbfolge einen Kenncode darstellt. Die Mikroteilchen werden dabei aus Melamin-Alcyd-Harz hergestellt, wobei beispielsweise 7 Farbschichten übereinander mit einer Dicke von ca. 100 µm auf einer Polyesterträgerfolie von ca. 50 µm aufgebracht werden.

Die DE 198 53 764 A1 betrifft ein System für die Sicherung und Kennzeichnung von Produkten unter Verwendung von Mikropartikeln, die jeweils mehrere einen Code ausbildende Farbschichten aufweisen

Aus der EP 1 335 327 A2 ist eine Karte zur Identifizierung bekannt, bei der ein Teil der Identifikationsdaten durch in den Kartenwerkstoff eingebrachte Teile gebildet wird, über deren Anordnung - Lage und Anzahl - und/oder Ausbildung eine Zuordnung zu einer Identität erfolgt.

Es ist daher die Aufgabe der vorliegenden Erfindung, ein Zugangsberechtigungssystem der eingangs genannten Art in vorteilhafter Weise weiterzubilden, insbesondere dahingehend, dass das Zugangsberechtigungssystem nur den Personen Zugang gewährt, die sich zu Recht identifiziert haben und denen eine Zugangsberechtigung auch tatsächlich zusteht.

Diese Aufgabe wird erfindungsgemäß gelöst durch ein Zugangsberechtigungssystem mit den Merkmalen des Anspruchs 1. Danach ist vorgesehen, dass ein Zugangsberechtigungssystem wenigstens eine Anordnung von mehreren Mikropartikeln und wenigstens eine Identifizierungseinheit umfasst, wobei die Anordnung der Mikropartikel auf der Identifizierungseinheit angebracht ist, wobei die Anordnung der Mikropartikel eine fälschungssichere Kennzeichnung ausbildet und wobei die Mikropartikel jeweils eine erste Schicht und jeweils eine zweite Schicht aufweisen.

Die Erfindung basiert auf dem Grundgedanken, eine Identifizierungseinheit, die Bestandteil eines Zugangsberechtigungssystems ist, um ein zusätzliches Sicherheitsmerkmal zu ergänzen, das fälschungssicher ist. Dabei wird eine übliche Identifizierungseinheit, beispielsweise eine Code-Karte oder ein sogenannter Badge, die beispielsweise auf einem Magnetstreifen oder einem RFID-Chip eingespeicherte elektronische Kennung oder digitale Kennung aufweisen, die durch das Zugangsberechtigungssystem auslesbar ist und zur Identifizierung dient, um eine physische fälschungssichere Kennzeichnung ergänzen, so dass die Zugangsberechtigung nicht allein auf dem elektronischen Code und bzw. digital auf der Identifizierungseinheit hinterlegten Code beruht. Vielmehr tritt nun eine weitere Kennzeichnung hinzu, die weder elektronisch noch digital ist und ohne deren korrekte Identifizierung eine Identifizierung gegenüber dem Zugangsberechtigungssystem nicht möglich ist.

Die Anordnung der Mikropartikel kann genau ein einziges Mal existent sein. Durch den Umstand, dass mehrere Mikropartikel eingesetzt werden, die in einem Herstellungsverfahren hergestellt werden (vgl. beispielsweise WO 97/38409 A1 oder EP 2 688 011 A1), das Mikropartikel produziert, die jeweils bereits aufgrund des Herstellungsverfahrens für sich genommen einzigartig sind, wird zwangsläufig eine Anordnung der Mikropartikel erreicht, die genau ein einziges Mal existent ist. Somit kann das Zugangsberechtigungssystem dahingehend modifiziert werden, dass unterschiedlichen Nutzern jeweils genau eine Anordnung von Mikropartikeln zugeordnet werden kann.

Des Weiteren kann vorgesehen sein, dass mehrere Anordnungen vorgesehen sind, die jeweils voneinander eindeutig unterschiedlich ausgebildet sind. Darüber hinaus kann als weiteres Sicherheitsmerkmal hinzutreten, dass neben der Ausbildung der einzelnen Mikropartikel auch die Anordnung der einzelnen Mikropartikel zueinander randomisiert und damit jeweils voneinander eindeutig unterschiedlich ausgebildet sein kann. Dadurch kann die Sicherheit gegenüber Fälschungen noch weiter erhöht werden.

Jeder einzelnen Identifizierungseinheit kann genau eine Anordnung von Mikropartikeln zugeordnet sein. Dadurch wird es möglich, jede einzelne Identifizierungseinheit, wie beispielsweise eine Zugangskarte oder einen Badge neben beispielsweise einem eindeutigen Code zusätzlich mit einer eindeutigen fälschungssicheren Kennzeichnung bestehend aus mehreren Mikropartikeln zu versehen und diese Identifizierungseinheit dann der entsprechenden Person zuzuordnen, der eine Zugangsberechtigung auch zusteht.

Das Zugangsberechtigungssystem kann weiter ein Lesegerät aufweisen, mittels dessen die Identifizierungseinheit analysierbar ist. Mittels des Lesegeräts kann beispielsweise die fälschungssichere Kennzeichnung, die durch die Anordnung der mehreren Mikropartikel ausgebildet ist, analysiert werden. Mittels des Lesegeräts kann das Zugangsberechtigungssystem analysieren, ob die zur Prüfung der Zugangsberechtigung vorgelegte Identifizierungseinheit tatsächlich eine korrekte Identifizierungseinheit ist, die als Ausweis einer Zugangsberechtigung dient.

Das Lesegerät kann ein optisches Analysemodul aufweisen, mittels dessen die Anordnung der Mikropartikel aufnehmbar und analysierbar ist. Denkbar ist beispielsweise, dass das Lesegerät optische Sensoren, wie beispielsweise eine Kamera, aufweist, mittels deren die Anordnung der Mikropartikel aufgenommen und dann beispielsweise mittels Bildverarbeitungsverfahren, die durch das Analysemodul oder ein Bildanalysemodul des optischen Analysemoduls durchgeführt werden, analysiert werden. Dadurch wird es möglich, einfach und sicher die Anordnung der Mikropartikel, die eine fälschungssichere Kennzeichnung ausbilden, auf Richtigkeit hin zu überprüfen.

Das Lesegerät kann weiter einen Datenspeicher aufweisen oder mit einem Datenspeicher des Zugangsberechtigungssystems verbindbar sein, wobei in dem Datenspeicher Informationen betreffend die Anordnung der Mikropartikel hinterlegt sind. Denkbar ist beispielsweise, in dem Datenspeicher Informationen betreffend Art und Umfang der Zugangsberechtigung zu hinterlegen. Darüber hinaus kann in dem Datenspeicher (aber nicht nur dort) auch hinterlegt sein, welche fälschungssicheren Kennzeichnungen bzw. Anordnungen von Mikropartikeln vorhanden sind und im Zusammenhang mit dem Zugangsberechtigungssystem auch tatsächlich genutzt werden. Denkbar ist auch, dass als Information hinterlegt wird, welche Identifizierungseinheit (z.B. mit welchem elektronischen bzw. digitalen Code) welcher Anordnung von Mikropartikeln zugeordnet ist.

Das Zugangsberechtigungssystem kann weiter wenigstens eine Recheneinheit aufweisen, wobei das Zugangsberechtigungssystem derart beschaffen ist, dass es erst bei korrekter Identifizierung der Identifizierungseinheit mittels des Lesegeräts den Zugang zur Recheneinheit frei gibt. Die Recheneinheit kann ein einfacher Personalcomputer (PC) sein, oder aber auch ein Rechnernetzwerk oder eine große Datenverarbeitungsanlage oder ein Serversystem oder ein Kommunikationsnetzwerk oder dergleichen.

Bei der Recheneinheit kann es sich insbesondere um ein Computersystem, wie beispielsweise ein PC, ein Laptop, ein Tablet-PC oder dergleichen handeln.

Darüber hinaus kann vorgesehen sein, dass die Recheneinheit Bestandteil einer physischen Zugangskontrolleinheit wie einer Zugangskontrolle zu einem Gebäude ist. Denkbar ist beispielsweise, dass es sich bei der Identifizierungseinheit und dem Zugangsberechtigungssystem um Identifizierungsmittel handelt, die im Zusammenhang mit der Kontrolle der Zugangsberechtigung von Personen zu Firmengebäuden oder öffentlichen Gebäuden, z.B. dem Sitz öffentlicher Einrichtungen, Ämtern oder Ministerien oder dergleichen dienen.

Weitere Einzelheiten und Vorteile der Erfindung sollen nun anhand eines in der Zeichnung dargestellten Ausführungsbeispiels näher erläutert werden.

Es zeigen:
- Figur 1:: eine Vielzahl von Mikropartikeln gemäß des erfindungsgemäßen Systems, und
- Figur 2:: eine schematische Darstellung des erfindungsgemäßen Systems.

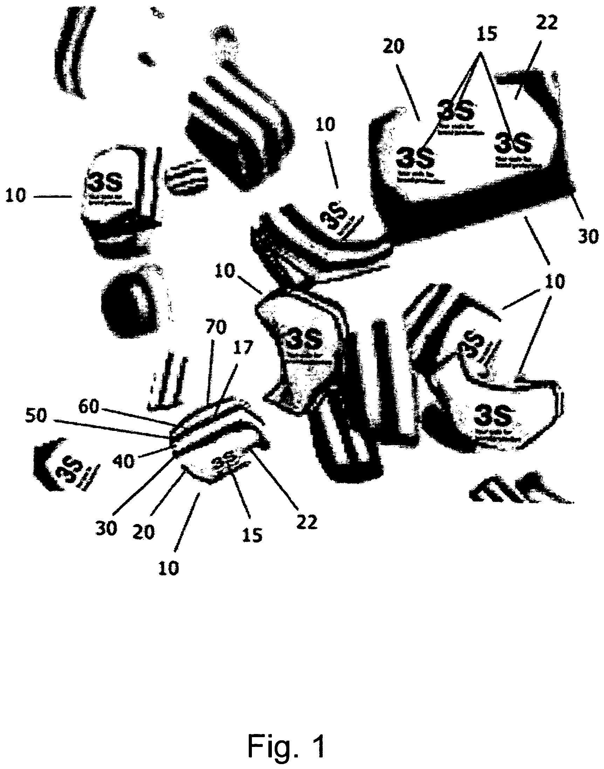

Figur 1 zeigt als Bestandteil des erfindungsgemäßen Systems 1 eine Vielzahl von Mikropartikeln 10.

Die Mikropartikel 10 weisen dabei wenigstens eine erste Schicht 20 auf, auf der im Herstellungsverfahren die weiteren Schichten 30, 40, 50, 60, 70 aufgetragen werden. Die erste Schicht 20 ist somit eine Trägerschicht 20.

Die Schichten 30, 40, 50, 60, 70 sind dabei Farbschichten, die auf die Trägerschicht 20 aufgetragen werden.

Die erste Schicht 20 bzw. Trägerschicht 20 bildet eine außen liegende Seite 22 des Mikropartikels 10. Auf dieser außen liegenden Seite 22 ist dabei zumindest ein Zeichen 15, hier ein Logo 15 bzw. die Marke eines Unternehmens 15 angeordnet. Dieses Zeichen 15 ist dabei bereits im Vorfeld auf der Schicht 20 aufgebracht bzw. aufgetragen.

Grundsätzlich ist aber auch denkbar, dass die erste Schicht 20 bzw. Trägerschicht 20 eine Farbschicht ist, auf der kein Zeichen 15 angebracht ist.

Insbesondere kann es sich bei der Schicht 20 um eine Trägerfolie, insbesondere um eine Kunststofffolie wie eine Polyesterfolie / PET-Folie handeln. Grundsätzlich geeignet sind Kunststofffolien, die (auch unter Hitzeeinwirkung) form- und/oder maßstabil bleiben. Die Zeichen 15 können dabei aufgedruckt oder in sonstiger Form auf der Trägerfolie 20 aufgebracht sein. Grundsätzlich ist auch denkbar, dass die Zeichen 15 als Schrift im Nanobereich auf der Trägerschicht 20 aufgebracht sind. Denkbar ist beispielsweise, dass die Schrifthöhe oder die Zeichenhöhe 1 nm oder mehr beträgt.

Es ist ferner denkbar, dass die Trägerfolie 20 auf der Seite 22 mehrere Zeichen 15 in Form von Hologrammen oder Aufdrucken aufweist.

Die Mikropartikel 10 sind dabei derart beschaffen, dass die Mikropartikel 10 mit jeder ihrer Abmessungen ca. 200-300 µm, insbesondere 100 µm nicht überschreiten, vorzugsweise 50-60 µm, besonders bevorzugt 8 µm. Im in der Figur gezeigten Ausführungsbeispiel sind die Abmessungen der Mikropartikel 10 im Bereich zwischen ca. 8 µm bis ca. 100 µm gewählt, wobei jedoch diese Untergrenze und Obergrenze nicht unter- bzw. überschritten wird.

Die Schichten 30, 40, 50, 60, 70 sind Farbschichten, hier beispielsweise eine rote Farbschicht 30, eine weiße Farbschicht 40, eine blaue Farbschicht 50, eine weitere weiße Farbschicht 60 und eine schwarze Farbschicht 70.

Der Mikropartikel 10 weist ferner wenigstens eine Fläche 17 auf, die derart beschaffen ist, dass die übereinander liegenden Farbschichten 30, 40, 50, 60, 70 ersichtlich sind. Die Fläche 17 ist eine Seitenfläche 17, die durch den Zerkleinerungsprozess während der Herstellung des Mikropartikels 10 entsteht, also beispielsweise im Wesentlichen eine Schnittkante oder eine Bruchkante ist.

Die Anordnung dieser Farben bzw. Farbschichten 30, 40, 50, 60, 70 bildet einen Farbcode aus, der in Kombination mit dem Zeichen 15, hier beispielsweise dem Markenzeichen eines Unternehmens, insgesamt einen fälschungssicheren Code ausbildet. Dieser Code kann einfach beispielsweise mittels eines Stabmikroskops bzw. Auflichtmikroskops überprüft werden.

Grundsätzlich ist auch denkbar, dass die Mikropartikel 10 in einem Aufstrich, wie beispielsweise einer Farbe oder einem Lack dispergiert werden und somit direkt auf dem zu kennzeichnenden Produkt aufgebracht werden können.

Die Herstellung der Mikropartikel 10 kann beispielsweise gemäß der EP 2 688 011 A1 oder der DE 26 51 158 A1 erfolgen.

Die Farbschichten können einen Farbcode gemäß der DE 198 53 764 A1 ausbilden.

Vorteilhafterweise wird dabei die Größe der Mikropartikel 10 in einem Bereich zwischen ca. 8 µm bis ca. 100 µm gewählt, da in diesem Bereich jedenfalls sichergestellt ist, dass wenigstens ein Zeichen 15 auf der außen liegenden Seite 22 der Trägerschicht 20 erkennbar ist.

Wie sich dies aus Figur 1 ergibt, sind die Mikropartikel 10 aufgrund des Zerkleinerungsvorgangs nicht identisch, sondern hinsichtlich ihrer Formgebung randomisiert, d.h. die Formgebung der Partikel ist zufällig und nicht vordefiniert.

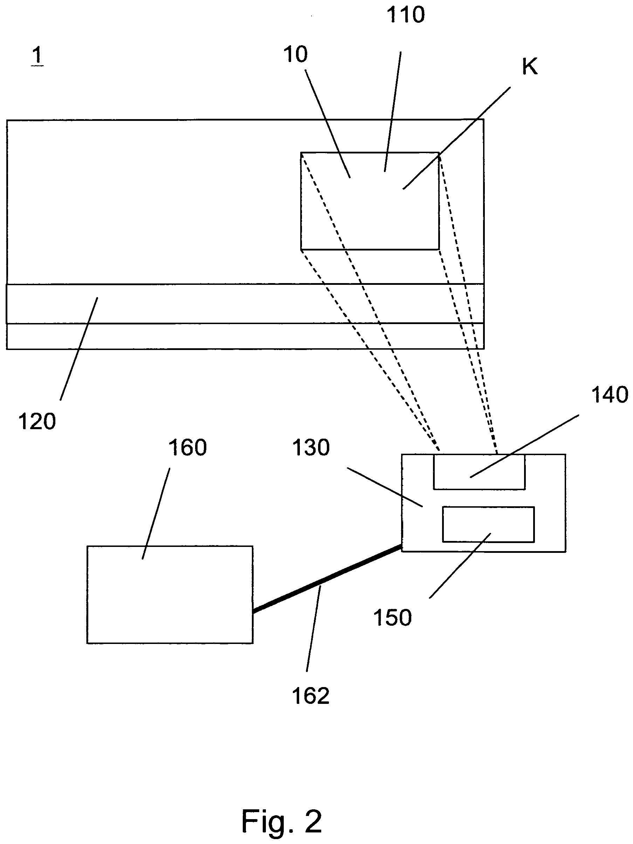

Figur 2 zeigt schematisch den Aufbau des Zugangsberechtigungssystems 1 gemäß Ausführungsbeispiel der vorliegenden Erfindung.

Wie dies aus Figur 2 ersichtlich ist, weist das Zugangsberechtigungssystem 1 eine Anordnung 110 von mehreren Mikropartikeln 10 und eine Identifizierungseinheit 120 in Form einer Zugangskarte auf.

Auf der Identifizierungseinheit 120 ist beispielsweise ein Magnetstreifen und/oder ein RFID-Code eingearbeitet, mit dem eine digitale Signatur mit der Identifizierungseinheit 120 verknüpft bzw. auf dieser angeordnet ist.

Die Anordnung 110 der Mikropartikel 10 ist ebenfalls auf der Identifizierungseinheit 120 angebracht. Dadurch ist neben der digitalen Signatur auch gleichzeitig eine weitere physische Signatur auf der Identifizierungseinheit 120 angeordnet.

Die Mikropartikel 10 bilden eine fälschungssichere Kennzeichnung K aus.

Dabei ist die Anordnung 110 der Mikropartikel 10 genau ein einziges Mal existent.

Mehrere Anordnungen 110 bilden dabei auch jeweils voneinander eindeutig unterschiedlich ausgebildete Anordnungen aus.

Die Tatsache, dass die Anordnung 110 der Mikropartikel 10 genau ein einziges Mal existent ist und dass mehrere Anordnungen 110 jeweils voneinander unterschiedlich ausgebildet sind, hängt damit zusammen, dass aufgrund des Herstellungsprozesses der Mikropartikel 10, wie er beispielsweise in der EP 2 688 011 A1 oder der DE 26 51 158 A1 beschrieben ist, durch die Zerkleinerung und damit der Herstellung der einzelnen Mikropartikel aus den aufeinander aufgetragenen Grundschichten, die einen plattenartigen Schichtaufbau ausbilden, jeweils individualisierte Mikropartikel entstehen. Durch das Erstellen einer Anordnung 110 aus mehreren diesen Mikropartikeln 10 entsteht zudem weiter jeweils für sich genommen eine Anordnung, die von einer anderen Anordnung 110 eindeutig unterschieden werden kann.

Denn eine derartige Anordnung 110 kann beispielsweise dadurch erzeugt werden, dass mittels eines nicht näher dargestellten Dispensers mehrere Mikropartikel in einem Lack oder beispielsweise einem transparenten Klebstoff auf die Identifizierungseinheit 120 aufgetragen werden, wobei die Mikropartikel innerhalb der Anordnung 110 randomisiert angeordnet werden.

Dadurch entsteht zwangsläufig pro Anordnung eine jeweils von einer anderen Anordnung 110 unterschiedliche Anordnung 110.

Jeder Identifizierungseinheit 120 ist genau eine Anordnung 110 von Mikropartikeln 10 zugeordnet.

Des Weiteren weist das Zugangsberechtigungssystem 1 ein Lesegerät 130 auf, mittels dessen die Identifizierungseinheit 120 analysierbar ist.

Dabei weist das Lesegerät 130 ein optisches Analysemodul 140 auf mittels dessen die Anordnung 110 der Mikropartikel 10 aufnehmbar und analysierbar ist.

Ferner weist das Lesegerät 130 einen Datenspeicher 150 auf, oder ist mit einem Datenspeicher 150 des Zugangsberechtigungssystems 1 verbindbar.

In dem Datenspeicher 150 sind dabei Informationen betreffend die Anordnung 110 der Mikropartikel 10 hinterlegt.

Das Zugangsberechtigungssystem 1 weist weiter wenigstens eine Recheneinheit 160 auf, wobei das Zugangsberechtigungssystem 1 derart beschaffen ist, dass es erst bei korrekter Identifizierung der Identifizierungseinheit 120 mittels des Lesegeräts 130 den Zugang zur Recheneinheit 160 frei gibt.

Hierzu ist die Recheneinheit 160 mit dem Lesegerät 130 verbunden, z.B. kabellos oder ggf. auch kabelgebunden (siehe Figur 2 über das Verbindungskabel 162).

Bei der Recheneinheit 160 kann es sich um ein Computersystem, wie beispielsweise einen einzelnen Computer, einen Tablet-PC, einen Laptop oder auch ein Rechnernetzwerk oder eine Serverinfrastruktur handeln. Denkbar ist aber auch, dass es sich bei der Recheneinheit 160 um den Bestandteil einer physischen Zugangskontrolleinheit, wie einer Zugangskontrolle zu einem Gebäude handeln kann.

Das Verfahren zur Zugangsberechtigungskontrolle mittels des Zugangsberechtigungssystems 1 erfolgt folgendermaßen:
Unter Verwendung des Zugangsberechtigungssystems 1, wie es vorstehend beschrieben ist, wird die Identifizierungseinheit 120 in das Lesegerät 130 eingeschoben bzw. derart in die Nähe des Lesegeräts 130 gebracht, dass das Lesegerät 130 sowohl den auf der Identifizierungseinheit 120 angebrachten elektronischen bzw. digitalen Code als auch die fälschungssichere Kennzeichnung K bestehend aus der Anordnung 110 aus den mehreren Mikropartikeln 10 analysieren kann.

Das Auslesen des digitalen Codes der Identifizierungseinheit 120 erfolgt durch Auslesen beispielsweise eines Magnetstreifens oder des RFID-Chips, der auf der Identifizierungseinheit 120 angebracht ist und wie dies bereits auch allgemein bekannt ist.

Die Analyse der fälschungssicheren Kennzeichnung K erfolgt mittels des optischen Analysemoduls 140, das beispielsweise mit einer Kamera die Anordnung 110 der Mikropartikel 10 aufnimmt, die gewonnene Bilddatei mit den im Datenspeicher 150 hinterlegten Informationen betreffend die vorhandenen fälschungssicheren Kennzeichnungen K vergleicht.

Kommt das Zugangsberechtigungssystem 1 zu dem Ergebnis, dass die fälschungssichere Kennzeichnung K vorhanden ist und dass diese fälschungssichere Kennzeichnung K zudem auch noch mit dem der Identifizierungseinheit 120 zugeordneten elektronischen bzw. digitalen Code verknüpft ist, so wird mittels des Zugangsberechtigungssystems 1 erkannt, dass eine Zugangsberechtigung vorliegt.

Anderenfalls wird kein Zugang gewährt.

In diesem Zusammenhang ist auch denkbar, dass das Zugangsberechtigungssystem auch im Zusammenhang mit Veranstaltungen beispielsweise als Eintrittskarte verwendet werden kann.

Denkbar ist auch, dass je nach Ausgestaltung des Zugangsberechtigungssystems, insbesondere der Anordnung 110 sowie der Identifizierungseinheit 120 Zugang zu unterschiedlichen Bereichen in einem Gebäude gewährt werden kann. Dabei kann es sich beispielsweise im Zusammenhang mit Veranstaltungen um unterschiedliche Bereiche der Veranstaltungslokalität handeln, beispielsweise entsprechende Sitzplatz- und/oder Stehplatzbereiche, Logenbereiche und/oder VIP-Bereiche oder dergleichen.

Denkbar ist aber auch, dass im Zusammenhang mit Zugangsberechtigungssystemen zu Gebäuden jeder fälschungssicheren Kennzeichnung eine Zugangsberechtigung zu einem bestimmten Bereich des Gebäudes oder Abschnitt des Gebäudes, insbesondere einem Stockwerk oder mehreren Stockwerken und/oder sämtlichen Stockwerken zugeordnet wird, je nach Zugangsberechtigung des einzelnen Nutzers.

Jede fälschungssichere Kennzeichnung kann auch nutzerspezifische Merkmale, wie beispielsweise Firmenzugehörigkeit (beispielsweise über die Verwendung der Firmenfarben im erzeugten Farbcode) enthalten. Denkbar ist auch, dass länderspezifische Informationen in der fälschungssicheren Kennzeichnung K enthalten sind, beispielsweise die Zuordnung von Länderfarben zu einer fälschungssicheren Kennzeichnung, wobei beispielsweise die entsprechenden Farben in der fälschungssicheren Kennzeichnung auch vorkommen.

Aufgrund des Umstandes, dass wie vorstehend erwähnt, eine Anordnung 110 der Mikropartikel 10 genau ein einziges Mal existent ist, genügt es, bei Verlust einer Identifizierungseinheit 120 mit entsprechend einer Anordnung 110 bestehend aus mehreren Mikropartikeln 10, die verloren gegangene Identifizierungseinheit 120 durch eine neue Identifizierungseinheit 120 mit einer neuen Anordnung 110 zu ersetzen. Es ist nicht notwendig, den Farbcode, der durch die Farbschichten der Mikropartikel 10 ausgebildet wird, zu erneuern. Die korrekte Identifizierung der neu ausgestellten Identifizierungseinheit 120 wird lediglich über die neu erzeugte Anordnung 110 der Mikropartikel 10 gewährleistet.

## Patentansprüche

1. Zugangsberechtigungssystem (1) umfassend wenigstens eine Anordnung (110) von mehreren Mikropartikeln (10) und wenigstens eine Identifizierungseinheit (120), wobei die Anordnung (110) der Mikropartikel (10) auf der Identifizierungseinheit (120) angebracht ist, wobei die Anordnung (110) der Mikropartikel (10) eine fälschungssichere Kennzeichnung (K) ausbildet, wobei ein Mikropartikel (10) wenigstens eine erste Schicht (20) und wenigstens eine zweite Schicht (30) aufweist.

2. Zugangsberechtigungssystem (1) nach Anspruch 1, **dadurch gekennzeichnet, dass** die Anordnung (110) der Mikropartikel (10) genau ein einziges Mal existent ist.

3. Zugangsberechtigungssystem (1) nach Anspruch 2, **dadurch gekennzeichnet, dass** mehrere Anordnungen (110) vorgesehen sind, die jeweils voneinander eindeutig unterschiedlich ausgebildet sind.

4. Zugangsberechtigungssystem (1) nach Anspruch 3, **dadurch gekennzeichnet, dass** jeder Identifizierungseinheit (120) genau eine Anordnung (110) von Mikropartikeln (10) zugeordnet ist.

5. Zugangsberechtigungssystem (1) nach einem der vorhergehenden Ansprüche, **dadurch gekennzeichnet, dass** das Zugangsberechtigungssystem (1) weiter ein Lesegerät (130) aufweist, mittels dessen die Identifizierungseinheit (120) analysierbar ist.

6. Zugangsberechtigungssystem (1) nach Anspruch 5, **dadurch gekennzeichnet, dass** das Lesegerät (130) ein optisches Analysemodul (140) aufweist, mittels dessen die Anordnung (110) der Mikropartikel (10) aufnehmbar und analysierbar ist.

7. Zugangsberechtigungssystem (1) nach Anspruch 5 oder Anspruch 6, **dadurch gekennzeichnet, dass** das Lesegerät (130) weiter einen Datenspeicher (150) aufweist oder mit einem Datenspeicher (150) des Zugangsberechtigungssystems (1) verbindbar ist, wobei in dem Datenspeicher (150) Informationen betreffend die Anordnung (110) der Mikropartikel (10) hinterlegt sind.

8. Zugangsberechtigungssystem (1) nach einem der Ansprüche 5 bis 7, **dadurch gekennzeichnet, dass** das Zugangsberechtigungssystem (1) weiter wenigstens eine Recheneinheit (160) aufweist, wobei das Zugangsberechtigungssystem (1) derart beschaffen ist, dass es erst bei korrekter Identifizierung der Identifizierungseinheit (1) mittels des Lesegerätes (130) den Zugang zur Recheneinheit (160) freigibt.

9. Zugangsberechtigungssystem (1) nach Anspruch 8, **dadurch gekennzeichnet, dass** es sich bei der Recheneinheit (160) um ein Computersystem handelt.

10. Zugangsberechtigungssystem (1) nach Anspruch 8 oder 9, **dadurch gekennzeichnet, dass** die Recheneinheit (160) Bestandteil einer physischen Zugangskontrolleinheit wie einer Zugangskontrolle zu einem Gebäude ist.

## Claims

1. An access authorization system (1) comprising at least one arrangement (110) of a plurality of microparticles (10) and at least one identification unit (120), wherein the arrangement (110) of microparticles (10) is affixed to the identification unit (120), wherein the arrangement (110) of microparticles (10) forms a forgery-proof identification (K), wherein a microparticle (10) comprises at least one first layer (20) and at least one second layer (30).

2. The access authorization system (1) according to claim 1, **characterized in that** the arrangement (110) of microparticles (10) exists exactly once.

3. The access authorization system (1) according to claim 2, **characterized in that** a plurality of arrangements (110) are provided which are each of clearly different configuration from one another.

4. The access authorization system (1) according to claim 3, **characterized in that** each identification unit (120) is associated with exactly one arrangement (110) of microparticles (10).

5. The access authorization system (1) according to one of the preceding claims, **characterized in that** the access authorization system (1) further comprises a reader unit (130) by means of which the identification unit (120) can be analyzed.

6. The access authorization system (1) according to claim 5, **characterized in that** the reader unit (130) comprises an optical analytics module (140), by means of which the arrangement (110) of the microparticles (10) can be recorded and analyzed.

7. The access authorization system (1) according to claim 5 or 6, **characterized in that** the reader unit (130) further comprises a data storage (150) or can be connected to a data storage (150) of the access authorization system (1), wherein information on the arrangement (110) of the microparticles (10) is stored in said data storage (150).

8. The access authorization system (1) according to one of claims 5 to 7, **characterized in that** the reader unit (130) further comprises at least one processing unit (160), wherein the access authorization system (1) is structured such that access is only permitted to the processing unit (160) upon the reader unit (130) correctly identifying the identification unit (1).

9. The access authorization system (1) according to claim 8, **characterized in that** the processing unit (160) is a computer system.

10. The access authorization system (1) according to claim 8 or 9, **characterized in that** the processing unit (160) is a component part of a physical access control unit such as an access control to a building.

## Revendications

1. Système d'autorisation d'accès (1) comprenant au moins un agencement (110) de plusieurs microparticules (10) et au moins une unité d'identification (120), l'agencement (110) des microparticules (10) étant disposé sur l'unité d'identification (120), l'agencement (110) des microparticules (10) formant un signe distinctif infalsifiable (K), une microparticule (10) comportant au moins une première couche (20) et au moins une deuxième couche (30).

2. Système d'autorisation d'accès (1) selon la revendication 1, **caractérisé en ce que** l'agencement (110) des microparticules (10) existe précisément une seule fois.

3. Système d'autorisation d'accès (1) selon la revendication 2, **caractérisé en ce que** plusieurs agencements (110) sont prévus, ces agencements étant respectivement réalisés de façon univoquement différente les uns par rapport aux autres.

4. Système d'autorisation d'accès (1) selon la revendication 3, **caractérisé en ce qu'**un agencement (110) de microparticules (10) est précisément associé à chaque unité d'identification (120).

5. Système d'autorisation d'accès (1) selon l'une quelconque des revendications précédentes, **caractérisé en ce que** le système d'autorisation d'accès (1) comporte en outre un appareil de lecture (130) à l'aide duquel l'unité d'identification (120) peut être analysée.

6. Système d'autorisation d'accès (1) selon la revendication 5, **caractérisé en ce que** l'appareil de lecture (130) comporte un module d'analyse optique (140) à l'aide duquel l'agencement (110) des microparticules (10) est logé ou peut être logé.

7. Système d'autorisation d'accès (1) selon la revendication 5 ou 6, **caractérisé en ce que** l'appareil de lecture (130) comporte en outre une mémoire de données (150) ou peut être relié à une mémoire de données (150) du système d'autorisation d'accès (1), des informations concernant l'agencement (110) des microparticules (10) étant mémorisées dans la mémoire de données (150).

8. Système d'autorisation d'accès (1) selon l'une quelconque des revendications 5 à 7, **caractérisé en ce que** le système d'autorisation d'accès (1) comporte en outre au moins une unité de calcul (160), le système d'autorisation d'accès (1) étant créé de telle sorte qu'il libère en cas d'identification correcte de l'unité d'identification (1) l'accès à l'unité de calcul (160) par le biais de l'appareil de lecture (130).

9. Système d'autorisation d'accès (1) selon la revendication 8, **caractérisé en ce que** l'unité de calcul (160) prend la forme d'un système informatique.

10. Système d'autorisation d'accès (1) selon la revendication 8 ou 9, **caractérisé en ce que** l'unité de calcul (160) se compose d'une unité de contrôle physique telle qu'un contrôle d'accès à un bâtiment.
